# EUROPÄISCHE PATENTSCHRIFT

(11) **EP 0 561 848 B1**
(45) Veröffentlichungstag und Bekanntmachung des Hinweises auf die Patenterteilung: **21.09.1994**
(21) Anmeldenummer: 91920881.9
(22) Anmeldetag: 29.11.1991
(51) Int. Cl.: B62D 25/04, B62D 29/00

(54) **TÜRSÄULE AN EINER KAROSSERIE EINES PERSONENKRAFTWAGENS**
DOOR PILLAR FOR PASSENGER CAR COACHWORK
MONTANT DE PORTE D'UNE CARROSSERIE DE VOITURE AUTOMOBILE

(30) Priorität: 20.12.1990 DE 4041021
(43) Veröffentlichungstag der Anmeldung: 29.09.1993
(73) Patentinhaber: AUDI AG, 85002 Ingolstadt (DE)
(72) Erfinder: KREIS, Gundolf, D-8072 Oberstimm (DE); ENNING, Norbert, D-8071 Denkendorf (DE); KLAGES, Ulrich, D-8070 Ingolstadt (DE); TIMM, Heinrich, D-8070 Ingolstadt (DE)
(74) Vertreter: Engelhardt, Harald
(86) Internationale Anmeldenummer: EP9102262
(87) Internationale Veröffentlichungsnummer: WO9211156

(56) Entgegenhaltungen:
- EP-A- 0 267 152
- CH-A- 411 594
- FR-A- 2 597 056
- LU-A- 64 879

## Beschreibung

Die Erfindung betrifft eine Türsäule an einer Karosserie eines Personenkraftwagens nach dem Oberbegriff des Anspruchs 1.

Übliche selbsttragende Fahrzeugkarosserien für Personenkraftwagen sind, einschließlich der Tragstruktur, aus Blechteilen hergestellt. Träger mit Hohlprofilen werden dabei aus jeweils zwei tiefgezogenen und miteinander verschweißten Blechen hergestellt. Solche Träger werden auch als vordere Türsäulen verwendet, an denen Scharniere für eine schwenkbare Lagerung von Fahrzeugtüren angebracht sind.

Für eine geeignete Einpassung der Fahrzeugtür in den Türausschnitt mit einem fluchtenden Verlauf der Außenkontur und gleichmäßigen Umfangsspalten sowie eine leichtgängige Schwenkung müssen die Scharnierteile eingestellt werden. Dazu sind eine Reihe von Maßnahmen allgemein bekannt, wie Einstellungen über Verbiegen der Scharnierböcke, Einstellungen über Langlochverbindungen, Verwendung von Kugelscharnieren, etc. Dazu sind in der Regel zusätzlich zum Träger Einstellvorrichtungen erforderlich, wobei die Einstellarbeiten teilweise aufwendig sind.

Die zum Aufbau solcher selbsttragenden Karosserien verwendeten Stahlbleche werden im Tiefziehverfahren verformt. Die Preßwerkzeuge zum Verformen der Bleche sind verhältnismäßig teuer, lassen jedoch sehr hohe Stückzahlen zu, so daß für eine Großserienfertigung damit eine kostengünstige Lösung zur Verfügung steht. Aufgrund der hohen Werkzeuginvestitionen gestaltet sich das beschriebene Verfahren für Kleinserien jedoch sehr kostenintensiv.

Es ist daher insbesondere für Kleinserien bekannt (EP-B-0 146 716), Fahrzeugkarosserien für Personenkraftwagen mit einer Tragstruktur aus Hohlprofilen herzustellen, welche durch Knotenelemente miteinander verbunden sind. Die Hohlprofile sind dabei als Leichtmetall-Strangprofile und die Knotenelemente als Leichtmetall-Gußteile ausgebildet. Neben einer kostengünstigeren Lösung für Kleinserien werden mit einer solchen Konstruktion vorteilhaft auch geringere Karosseriegewichte und Verbesserungen beim Korrosionsschutz erreicht.

In der konkret dargestellten Ausführungsform (EP-B-0 146 716, Fig. 1 und 2) ist die vordere Türsäule als einfacher, im Querschnitt rechteckiger Leichtmetall-Strangprofilträger ausgeführt. Wie an einem solchen Träger eine Fahrzeugtür über Scharniere gelagert werden könnte, ist offengelassen und nicht gezeigt.

Der Erfindung liegt die Aufgabe zugrunde, eine gattungsgemäße Türsäule so weiterzubilden, daß die Anbringung und Einstellung einer Fahrzeugtür einfach und kostengünstig möglich ist.

Diese Aufgabe wird mit den kennzeichnenden Merkmalen des Anspruchs 1 gelöst.

Gemäß Anspruch 1 besteht die Türsäule aus einem Leichtmetall-Hohlprofilträger als Strangprofil mit einer Außenwand, an deren Innenseite wenigstens zwei in einem Querabstand liegende, längs verlaufende Kanäle als Käfigprofile zur Aufnahme von Muttern von Verschraubungen angeordnet sind. Weiter sind in der Höhe von Scharnierböcken Löcher in der Außenwand als Durchgänge zu den Käfigprofilen zur Aufnahme der Verschraubungen angebracht. Die Scharnierböcke haben je eine Grundplatte mit im Querabstand der Käfigprofile angebrachten Bohrungen und die Grundplatten sind über die Verschraubungen an der Außenwand befestigt. In den Käfigprofilen können längsverschiebbar, jedoch verdrehsicher, entsprechend dimensionierte Käfigmuttern oder Schraubenköpfe der Verschraubungen gehalten werden. Damit wird eine wesentliche Montagehilfe erhalten, die auf einfache Weise schon bei der Herstellung des Strangprofils ohne weitere, zusätzliche Bearbeitungen vorgesehen werden kann. Ein weiterer Vorteil solcher Käfigprofile besteht darin, daß die dafür erforderlichen Kanalwände das Hohlprofil weiter aussteifen.

Vorteilhaft werden die Löcher in der Außenwand zu den Käfigprofilen nach Anspruch 2 als Langlöcher ausgebildet. Dadurch wird über die Länge der Langlöcher eine einfache Höheneinstellung möglich.

Um die geforderte, hohe Steifigkeit und Belastbarkeit der vorderen Türsäule, insbesondere auch bei einem Crash, zu erhalten, wird mit Anspruch 3 vorgeschlagen, im Hohlprofil Querstege vorzusehen.

In einer vorteilhaften, konkreten Ausführungsform nach Anspruch 4 sind die seitlichen Kanalwände des Käfigprofils durch im Querschnitt hakenförmige Längsstege gebildet, so daß das Käfigprofil zur Innenseite des Hohlprofils hin mit einem Längsspalt offen ist. Käfigmuttern können in einem solchen Kanal gut verdrehsicher gehalten werden, wobei nach innen überstehende Schraubenbolzen zur Innenseite des Hohlprofils durch den Längsspalt Platz haben.

Da ohnehin zweckmäßigerweise Querstege zur Aussteifung im Hohlprofil enthalten sind, werden diese Qerstege nach Anspruch 5 so gelegt, daß sie zur Bildung der Wände der Käfigkanäle mit herangezogen werden und somit eine Doppelfunktion haben.

Um zusätzlich zu der Höheneinstellung entlang der Langlöcher auch eine Quereinstellung zu ermöglichen, werden die Langlöcher mit etwas größerer Breite als die Bolzendurchmesser der Verschraubungen ausgeführt. Somit können bei entsprechend breiten Anlageflächen auch Einstellungen quer zum Profilverlauf durchgeführt werden.

Die Käfigprofile zur Aufnahme der Muttern für die Anbringung der Scharnierböcke verlaufen fertigungsbedingt in Längsrichtung der Türsäule. Die Stellung der Türsäule, insbesondere eine leichte Schrägstellung, ist durch eine Mehrzahl von Forderungen, beispielsweise Steifigkeitsanforderungen, Crashanforderungen, Türeindrehräume, Beinfreiheit beim Einsteigen, usw. bedingt. Die zweckmäßige Stellung der Türscharnierachse wird daher je nach Gegebenheiten nicht mit dem Profilverlauf der Türsäule zusammenfallen. Mit Anspruch 7 werden daher Maßnahmen vorgeschlagen, mit denen es möglich ist, eine unterschiedliche Stellung der Scharnierachse zum Verlauf des Strangprofils auf einfache Art zu realisieren. Dazu sind zwei unterschiedliche Scharnierböcke im Abstand angebracht, mit jeweils einem Stützarm an der Grundplatte, der einen Scharnierbolzen bzw. eine Bolzenaufnahme als Bohrung trägt. Der Stützarm des ersten Scharnierbocks liegt dabei in einem ersten Querabstand, bezogen auf den Profilverlauf, und der Stützarm des zweiten Scharnierbocks ist in einem zweiten, unterschiedlichen Querabstand, bezogen auf den Profilverlauf, angeordnet. Dadurch liegt die Scharnierachse schräg zum Profilverlauf. Bei üblichen Konstruktionen ist dabei die Winkeldifferenz zwischen Profilverlauf und Verlauf der Scharnierachse klein, so daß trotz dieser Winkeldifferenz eine Höheneinstellung entlang der Langlöcher, die nur über einen geringen Weg durchgeführt wird, ohne Schwierigkeiten möglich ist.

Falls erforderlich, ist auch eine Schrägstellung der Scharnierachse, bezogen auf den Verlauf der Außenwand, dadurch möglich, daß gemäß Anspruch 8 die Stützarme der beiden Scharnierböcke unterschiedlich lang gestaltet sind.

Für eine Leichtgängigkeit der Fahrzeugtür ist es nach Anspruch 9 erforderlich, die Scharnierbolzen bzw. die Bolzenaufnahmen nicht nach dem Profilverlauf, sondern nach der durch die unterschiedliche Gestaltung der Scharnierböcke vorgegebenen Scharnierachse auszurichten.

Anhand einer Zeichnung wird ein Ausführungsbeispiel der Erfindung mit weiteren Einzelheiten, Merkmalen und Vorteilen näher erläutert.

Es zeigen
- Fig. 1: eine Seitenansicht einer Türsäule,
- Fig. 2: eine Draufsicht auf eine Türsäule,
- Fig. 3: einen Querschnitt durch eine Türsäule entlang einer Linie A-A aus Fig. 2 im Bereich eines oberen Scharnierbocks und
- Fig. 4: einen Querschnitt durch die Türsäule entlang einer Linie B-B aus Fig. 2 im Bereich eines unteren Scharnierbocks.

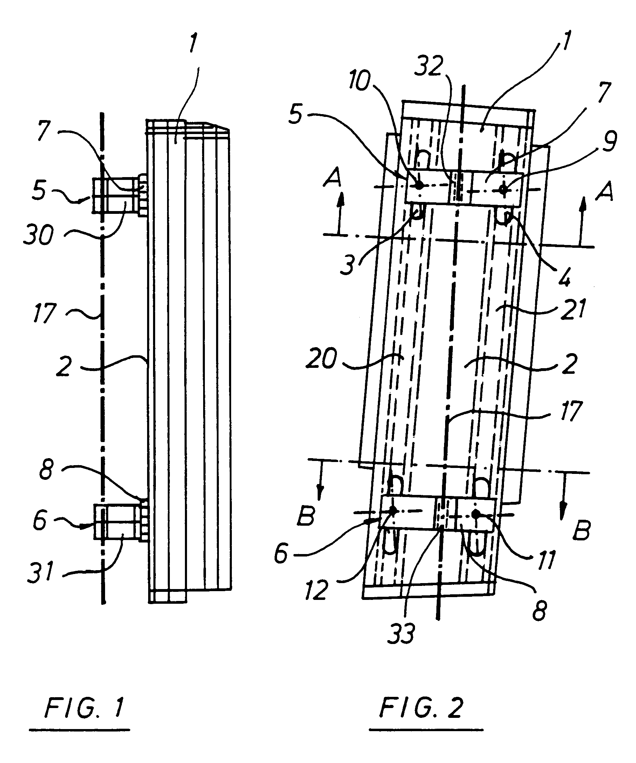

In den Fig. 1 und 2 ist in einer Seiten- und einer Draufsicht eine Türsäule 1 dargestellt, die als Hohlprofilträger in der Art eines Leichtmetall-Strangprofils ausgebildet ist. An einer Außenwand 2 sind in einem Querabstand liegende Langlöcher 3, 4 in der Höhe von Scharnierböcken 5, 6 angebracht.

Diese Scharnierböcke 5, 6 haben eine Grundplatte 7, 8 mit im Abstand der Langlöcher 3, 4 angebrachten Bohrungen 9, 10 und 11, 12.

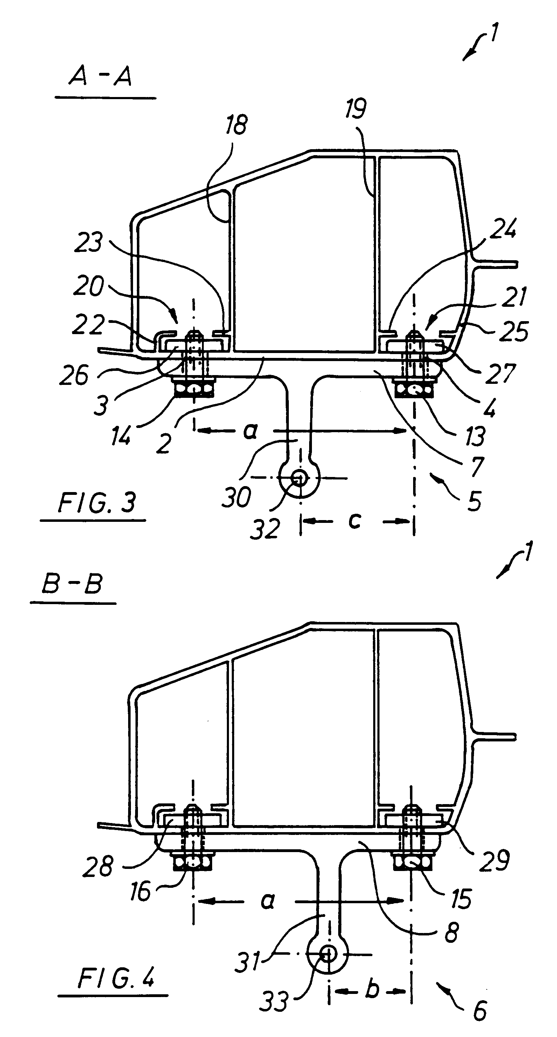

In die Langlöcher 3, 4 greifen Verschraubungen 13, 14 und 15, 16 (sh. Fig. 3 und 4) durch die Bohrungen 9, 10 und 11, 12 ein, mit denen die Scharnierböcke 5, 6 vor dem Festziehen verschiebbar und höhenverstellbar gehalten sind und durch Festziehen fixiert werden können.

Aus Fig. 2 ist zu ersehen, daß die Türsäule 1 schräg nach rechts geneigt ist, während die durch die Scharnierböcke 5 und 6 bestimmte Scharnierachse 17 etwa senkrecht steht und somit mit dem Verlauf der Türsäule 1 bzw. dem Profilverlauf einen spitzen Winkel einschließt. Dies wird durch unterschiedliche Ausführungen der Scharnierböcke 5 und 6 erreicht, wie dies anhand der Fig. 3 und 4 näher erläutert wird.

In den Fig. 3 und 4 sind Querschnitte entlang der Linien A-A und B-B aus Fig. 2 dargestellt. Dabei ist zu ersehen, daß das Hohlprofil zwei Querstege 18 und 19 enthält, die mit der Außenwand 2 im Bereich zwischen den Langlöchern 3 und 4 verbunden sind. Hinter den Langlöchern 3 und 4 im Bereich des Hohlprofils sind zwei längs verlaufende Kanäle als Käfigprofile 20 und 21 angeordnet. Die Käfigwände sind teilweise durch im Querschnitt hakenförmige Stege, durch Teile der Querstege 18 und 19 mit angeformten Fortsätzen 23, 24 oder durch einen Teil einer Außenwand 25 gebildet.

In den Käfigprofilen 20 und 21 sind Käfigmuttern 26, 27 und 28, 29 der Verschraubungen 13, 14 und 15, 16 verdrehgesichert angeordnet.

Die Scharnierböcke 5 und 6 bestehen aus den Grundplatten 7 und 8 sowie daran angeformten Stützarmen 30, 31, an deren freien Enden Aufnahmebohrungen 32, 33 zur Aufnahme von Scharnierbolzen angebracht sind.

Die Verschraubungen 13, 14 und 15, 16 liegen an den Scharnierböcken 5, 6 im gleichen Abstand (a), der dem Abstand der Langlöcher 3, 4 entspricht. Der Stützarm 30 des oberen Scharnierbocks 5 liegt etwa in der Mitte (Abstand c), während der Stützarm 31 des unteren Scharnierbocks 6 mehr zur rechten Seite hin (Abstand b) angeordnet ist. Durch die Differenz der Abstände (c und b) ist die Schrägstellung der Scharnierachse 17 gegenüber dem Profilverlauf der Türsäule 1 bestimmt.

Für eine Montage der Scharnierböcke 5, 6 werden die Käfigmuttern 26, 27 und 28, 29 von einer offenen Seite her in die Käfigprofile 20, 21 eingeschoben, in der Höhe eingestellt und anschließend, beispielsweise durch Verprägen der Kanalwände oder durch Einsetzen und Festziehen der Verschraubungen, fixiert.

## Patentansprüche

1. Türsäule an einer Karosserie eines Personenkraftwagens,
bestehend aus einem etwa senkrecht stehenden Hohlprofilträger und damit in einem Längsabstand mit Verschraubungen verbundenen Scharnierböcken, an denen eine Fahrzeugtür schwenkbar gelagert ist,
dadurch gekennzeichnet,
daß der Hohlprofilträger (1) ein Strangprofil aus Leichtmetall ist, mit einer Außenwand (2), an deren Innenseite wenigstens zwei in einem Querabstand liegende, längs verlaufende Kanäle als Käfigprofile (20, 21) zur Aufnahme von Muttern (26, 27, 28, 29) der Verschraubungen (13, 14, 15, 16) angeordnet sind, wobei in der Höhe der Scharnierböcke (5, 6) Löcher (3, 4) in der Außenwand (2) zu den Käfigprofilen (20, 21) für die Verschraubungen (13, 14, 15, 16) angebracht sind und
daß die Scharnierböcke (5, 6) je eine Grundplatte (7, 8) mit im Querabstand der Käfigprofile (20, 21) angebrachten Bohrungen (9, 10, 11, 12) aufweisen und die Grundplatten (7, 8) über die Verschraubungen (13, 14, 15, 16) an der Außenwand (2) befestigt sind.

2. Türsäule nach Anspruch 1, dadurch gekennzeichnet, daß die Löcher in der Außenwand als Langlöcher (3, 4) für eine Höheneinstellung der Scharnierböcke (5, 6) ausgeführt sind.

3. Türsäule nach Anspruch 1 oder 2, dadurch gekennzeichnet, daß im Hohlprofil Querstege (18, 19) enthalten sind, die insbesondere im Bereich zwischen den Käfigprofilen (20, 21) angeordnet sind.

4. Türsäule nach einem der Ansprüche 1 bis 3, dadurch gekennzeichnet, daß die Käfigprofile (20, 21) bzw. die seitlichen Kanalwände durch im Querschnitt hakenförmige Stege (22) gebildet sind, so daß die Käfigprofile (20, 21) zur Innenseite des Hohlprofils mit einem Längsspalt offen sind.

5. Türsäule nach Anspruch 3 oder 4, dadurch gekennzeichnet, daß wenigstens eine Kanalwand aus einem Teil eines Quersteges (18, 19) gebildet ist.

6. Türsäule nach einem der Ansprüche 1 bis 5, dadurch gekennzeichnet, daß der Durchmesser der Löcher bzw. die Breite der Langlöcher (3, 4) in der Außenwand (2) größer als der Bolzendurchmesser der Verschraubung (13, 14, 15, 16) ist, so daß damit vor dem Festziehen eine Querverstellung möglich ist.

7. Türsäule nach einem der Ansprüche 1 bis 6, dadurch gekennzeichnet, daß zwei unterschiedliche Scharnierböcke (5, 6) im Abstand angebracht sind mit jeweils einem Stützarm (30, 31) an der Grundplatte (7, 8), der einen Scharnierbolzen bzw. eine Bolzenaufnahme (32, 33) trägt,
wobei jeweils der Stützarm (30) des ersten Scharnierbocks (5) in einem ersten Querabstand (c) bezogen auf den Profilverlauf und der Stützarm (31) des zweiten Scharnierbocks (6) in einem zweiten, unterschiedlichen Querabstand (b) angeordnet sind, so daß die Scharnierachse (17) schräg zum Profilverlauf liegt.

8. Türsäule nach Anspruch 7, dadurch gekennzeichnet, daß die jeweiligen Stützarme (30, 31) der beiden Scharnierböcke (5, 6) unterschiedlich lang sind.

9. Türsäule nach Anspruch 7 oder 8, dadurch gekennzeichnet, daß die Scharnierbolzen bzw. die Bolzenaufnahmen (32, 33) nach der durch die unterschiedliche Gestaltung der Scharnierböcke (5, 6) vorgegebenen Scharnierachse (17) ausgerichtet sind.

## Claims

1. A door pillar on the bodywork of a private car,
consisting of a hollow section support disposed approximately vertically and hinge brackets attached thereto with a longitudinal spacing by means of bolted connections, on which hinge brackets a vehicle door is pivotally mounted,
characterised in that
the hollow section support (1) is an extruded section made of light metal, with an outer wall (2) on the inside of which at least two longitudinally extending channels, which are situated with a transverse spacing, are disposed as cage sections (20, 21) for receiving nuts (26, 27, 28, 29) of the bolted connections (13, 14, 15, 16), wherein holes (3, 4) to the cage sections (20, 21) are provided for the bolted connections (13, 14, 15, 16) in the outer wall (2) at the height of the hinge brackets (5, 6), and
that the hinge brackets (5, 6) each have a base plate (7, 8) with holes (9, 10, 11, 12) provided at the transverse spacing of the cage sections (20, 21) and the base plates (7, 8) are attached to the outer wall (2) via the bolted connections (13, 14, 15, 16).

2. A door pillar according to claim 1, characterised in that the holes in the outer wall are constructed as elongated holes (3, 4) for the height adjustment of the hinge brackets (5, 6).

3. A door pillar according to claim 1 or 2, characterised in that transverse webs (18, 19) are contained in the hollow section support, and are disposed in particular in the region between the cage sections (20, 21).

4. A door pillar according to any one of claims 1 to 3, characterised in that the cage sections (20, 21) or the lateral channel walls are formed by webs (22) of hook-shaped cross-section, so that the cage sections (20, 21) are open towards the inside of the hollow section with a longitudinal gap.

5. A door pillar according to claim 3 or 4, characterised in that at least one channel wall is formed from part of a transverse web (18, 19).

6. A door pillar according to any one of claims 1 to 5, characterised in that the diameter of the holes or the width of the elongated holes (3, 4) in the outer wall (2) is greater than the bolt diameter of the bolted connection (13, 14, 15, 16), so that a transverse adjustment is possible before tightening.

7. A door pillar according to any one of claims 1 to 6, characterised in that two different hinge brackets (5, 6) are mounted spaced apart, each with a support arm (30, 31) on the base plate (7, 8), which carries a hinge bolt or a bolt receiver (32, 33),
wherein in each case the support arm (30) of the first hinge bracket (5) is disposed at a first transverse distance (c) in relation to the course of the section and the support arm (31) of the second hinge bracket (6) is disposed at a second, different transverse distance (b), so that the hinge axis (17) is disposed inclined in relation to the course of the section.

8. A door pillar according to claim 7, characterised in that the respective support arms (30, 31) of the two hinge brackets (5, 6) are of different lengths.

9. A door pillar according to claim 7 or 8, characterised in that the hinge bolts or the hinge receivers (32, 33) are aligned in accordance with the hinge axis (17), which is predetermined by the different form of the hinge brackets (5, 6).

## Revendications

1. Montant de porte d'une carrosserie de voiture particulière,
se composent d'une poutrelle profilée creuse à peu près verticale et de ferrures de charnière qui sont fixées a celle-ci a distance longitudinale par des assemblages à vis et sur lesquelles une porte de voiture est montée pivotante,
caractérisé en ce que la poutrelle profilée creuse (1) est un profilé filé en métal léger, comportant une paroi extérieure (2) sur la face interne de laquelle sont disposées au moins deux rainures longitudinales, espacées d'une certaine distance transversale et réalisées sous forme de profils en cage (20, 21), pour recevoir des écrous (26, 27, 28, 29) des assemblages à vis (13, 14, 15, 16), des trous (3, 4) étant formés dans la paroi extérieure (2) a la hauteur des ferrures de charnière (5, 6) et débouchant dans les profils en cage (20, 21) pour les assemblages à vis (13, 14, 15, 16), et
en ce que les ferrures de charnière (5, 6) présentent chacune une plaque de base (7, 8) ayant des forures (9, 10, 11, 12) formées a la distance transversale des profils en cage (20, 21), et les plaques de base (7, 8) sont fixées a la paroi extérieure (2) au moyen des assemblages à vis (13, 14, 15, 16).

2. Montant de porte selon la revendication 1, caractérisé en ce que les trous dans la paroi extérieure sont réalisés sous forme de trous oblongs (3, 4) pour un réglage en hauteur des ferrures de charnière (5, 6).

3. Montant de porte selon la revendication 1 ou 2, caractérisé en ce que le profilé creux contient des cloisons transversales (18, 19) qui sont disposées en particulier dans la région comprise entre les profils en cage (20, 21).

4. Montant de porte selon l'une quelconque des revendications 1 a 3, caractérisé en ce que les profils en cage (20, 21), c'est-a-dire les parois latérales des rainures, sont formés par des nervures (32) en forme de crochet en coupe transversale, de sorte que les profils en cage (20, 21) sont ouverts par une fente longitudinale vers l'intérieur du profilé creux.

5. Montant de porte selon la revendication 3 ou 4, caractérisé en ce qu'au moins une paroi de la rainure est constituée par une partie d'une cloison transversale (18, 19).

6. Montant de porte selon l'une quelconque des revendications 1 à 5, caractérisé en ce que le diamètre des trous ou la largeur des trous oblongs (3, 4) dans la paroi extérieure (2) est plus grand que le diamètre des boulons de l'assemblage à vis (13, 14, 15, 16), de sorte qu'un déplacement transversal soit ainsi possible avant le serrage à bloc de cet assemblage.

7. Montant de porte selon l'une quelconque des revendications 1 à 6, caractérisé en ce que deux ferrures de charnière différentes (5, 6) sont placées à distance l'une de l'autre et ont chacune, sur leur plaque de base (7, 8), un bras-support (30, 31) qui porte un axe d'articulation au un logement (32, 33) pour un axe d'articulation ,
le bras-support (30) de la première ferrure de charnière (5) étant disposé a une première distance transversale (c) par rapport a l'axe du profilé et le bras-support (31) de la seconde ferrure de charnière (6) étant disposé à une seconde distance transversale différente (b), ce qui fait que l'axe (17) des charnières est oblique par rapport a l'axe du profilé.

8. Montant de porte selon la revendication 7, caractérisé en ce que les bras-supports (30, 31) des deux ferrures de charnière (5, 6) ont des longueurs différentes.

9. Montant de porte selon la revendication 7 ou 8, caractérisé en ce que les axes d'articulation ou les logements (332, 33) pour les axes d'articulation sont alignés suivant l'axe (17) des charnières, prédéfini par la configuration différente des ferrures de charnière (5, 6).
